# EUROPEAN PATENT SPECIFICATION

(11) **EP 2 563 111 B1**
(45) Date of publication and mention of the grant of the patent: **02.10.2019**
(21) Application number: 11774432.6
(22) Date of filing: 28.04.2011
(51) Int. Cl.: A01G 13/02

(54) **LAYING AND FIXING COVERINGS ON CULTIVATED AREAS**
ABLAGE UND BEFESTIGUNG VON ABDECKUNGEN AUF KULTIVIERTEN BEREICHEN
POSE ET FIXATION DE REVÊTEMENTS SUR DES SURFACES CULTIVÉES

(30) Priority: 28.04.2010 DK 201070173
(43) Date of publication of application: 06.03.2013
(73) Proprietor: Skov Johansen, Peter, 5853 Ørbæk (DK)
(72) Inventor: Skov Johansen, Peter, 5853 Ørbæk (DK)
(74) Representative: Tellefsen, Jens J.
(86) International application number: PCT/DK2011/050139
(87) International publication number: WO 2011/134476

(56) References cited:
- DE-A1- 10 006 477
- DE-U1- 20 004 634
- FR-A1- 2 570 924
- FR-A1- 2 736 796
- FR-A1- 2 935 223
- US-A- 3 180 290
- US-A- 4 092 936

## Description

### Field of the Invention

The present invention concerns a method for laying and/or fixing a covering material, such as a fibre web or plastic film, on a cultivated area and over a cultivation medium, where the cover material is laid by machine from a magazine in a direction of movement by an apparatus adapted for the purpose.

The invention further concerns an apparatus for performing such a method, wherein a cover material, such as a fibre web or plastic film is laid for covering a cultivated area, where the apparatus has direction of movement, a first side and a second side, where the apparatus at least at a first side includes a first grooving share and a first press wheel arranged behind the first grooving share, as seen in relation to the direction of movement.

### Background of the Invention

By horticulture and other utilisation of large cultivated areas it is often necessary to lay out cover material such as plastic film or fibre web. These cover materials or films are used for enhancing crop growth, for protection against weather or insects or for weed control.

Typically, two different types of webs are used, a narrow plastic film or fibre web rolled up on rolls and very wide webs which may be folded, possibly also rolled up on rolls.

Moreover, the cover material is reused as much as possible.

The large folded webs are normally laid either by rolling out the web after which an accessible edge side of the web is fastened manually, either by scooping soil on the edge or by laying sandbags on the web, followed by unfolding the web, and the remaining edges are fastened in the same way. When the web has been laid, the web can be further secured by adding more soil by machine, e.g. by running a ploughshare along the web such that soil is moved over upon the edges of the web or film.

This implies the disadvantage that it takes a long time to lay out a web while at the same time it typically comprises an appreciable amount of manual and physically hard work.

Narrow single layer webs or plastic films are normally laid by machine in that an apparatus runs in a track while the film is unrolled on the soil in the direction of movement. At the same time, the apparatus holds the film to the ground in that both longitudinal edge sides are simultaneously covered by soil concurrently with unrolling of the film. Typically, this is effected by a grooving share at the first and second sides, respectively, of the apparatus, with a leading edge and a trailing edge in relation to the direction of movement, forming a groove in the soil under the first and second edge sides of the film in that the leading edges of the grooving share are oriented towards the apparatus. Soil is thereby pushed away from the apparatus during the movement and is deposited outside the edge sides of the film. A press wheel disposed behind the grooving share in the direction of movement at the first and second sides of the apparatus retains the edge sides of the film at the bottom of the formed groove. Then a covering share with a leading edge and a trailing edge as seen in relation to the direction of movement, provided behind the press wheel at the first and second sides of the apparatus, pushes the soil back into the groove upon the retained edge side by orienting the leading edge of the cover share in direction away from the apparatus. The edges of the film are thereby laid and fixed concurrently with the movement of the apparatus.

This has the disadvantage that only films or webs with the same limited width as that of the apparatus can be laid, since the apparatus straddles the area to be covered. Also, the apparatus has the drawback that only webs rolled up in a single layer with uniform width and with a layered edge orientation in same radial plane can be laid. In reality, the apparatus can thereby only be used for laying out new webs or films rolled up at the factory. The narrow width furthermore entails that a relatively large part of the field is not covered due to the many gaps between webs laid in parallel.

FR 2736796 and FR 2935223 describes a method for laying and/or fixing a covering material, on a cultivated area and over a cultivation medium, where the cover material is laid by machine from a magazine and in a direction of movement by an apparatus adapted for the purpose.

FR 2736796 A describes a method for laying and/or fixing a covering material, such as a fibre web or plastic film, on a cultivated area and over a cultivation medium. The cover material is laid by machine from a magazine and in a direction of movement by an apparatus adapted for the purpose. During laying the film extends partly in the direction of movement and partly in a direction which is substantially perpendicular to the direction of movement. The cover material during laying is fixed in cultivation medium along one edge for a subsequent fixation of the opposite edge.

### Object of the Invention

It is the object of the invention to indicate a method and an apparatus for laying and fixing wide webs or films on cultivated areas entirely or partially by machine and in one operation.

### Description of the Invention

By a method for laying out and/or fixing a covering material, such as a fibre web or plastic film, on a cultivated area and over a cultivation medium where the cover material is laid by machine from a magazine and in a direction of movement by an device adapted for the purpose. The method is special in that the rolled- up covering material is arranged on a at least one carrying unit, said at least on carrying unit is arranged on the side of a vehicle towing the apparatus or where the at least one carrying unit is arranged on the side of the apparatus, and wherein the film during laying extends partly in the direction of movement and partly in a direction which is substantially perpendicular to the direction of movement and towards the area to be covered away from the apparatus and in a distance to the centre line of the apparatus so as to align a first longitudinal edge of the cover material relative to a first grooving share and a first press wheel of the apparatus when seen in relation to the direction of movement, whereby the cover material during laying is fixed in cultivation medium along only the first longitudinal edge and followed by a subsequent fixation of the opposite longitudinal edge of the cover material.

Hereby is achieved a result which is peculiar in that the film during laying extends partly in the direction of movement and partly in a direction which is substantially perpendicular to the direction of movement and towards the area to be covered and in a distance to the centre line of the apparatus, where the cover material during laying is fixed in cultivation medium along only one edge for a subsequent fixation of the opposite edge.

The present invention is also met by a device comprising a vehicle and an apparatus, for laying out and/or fixing a covering material, such as a fibre web or plastic film, on a cultivated area and over a cultivation medium where the cover material is laid by machine from a magazine and in a direction of movement by an apparatus adapted for the purpose. The device is special in that the device includes at least one carrying unit for cover material, where said at least one carrying unit is mounted on the side of a vehicle towing the apparatus or where the at least one carrying unit is arranged on the side of the apparatus, and that said at least one carrying unit is arranged so as to align a first longitudinal edge of the cover material relative to the first grooving share and the first press wheel when seen in relation to the direction of movement, and that said at least one carrying unit is arranged so as to extend from at least at the first side of the apparatus or the vehicle and thus extends in a direction which is substantially perpendicular to the direction of movement of the apparatus towards the area to be covered., Hereby is achieved a result which is peculiar in that the apparatus includes at least one carrying unit for cover material, where the at least one carrying unit is arranged at least at the first side of the apparatus and thus extends in a direction which is substantially perpendicular to the direction of movement and in a distance to the centre line of the apparatus towards the area to be covered away from the apparatus.

In a preferred variant of the method according to the invention, a groove is formed in the cultivation medium in the direction of movement, where the cover material is arranged in this groove, and where the cover material is fixed in the groove, preferably by a press wheel in the apparatus. The cover material is thus simultaneously laid out and fixed along an edge.

In yet a preferred variant of the invention, the method for laying and/or fixing the cover material may include that cover material is fixed at both sides of the apparatus, where the fixed cover material thus extends away from both sides of the apparatus. It is thus possible to lay out and fix cover material on sizeable areas by fixing at one side and simultaneously laying and fixing at a second side, whereby in comparison with the hitherto used methods a great saving of time is attained as one working operation according to the invention results in an appreciably larger covered area. The cover material can be much wider than the apparatus and cover material can be laid at both sides of the apparatus as well.

Fixing the edge of the cover material may, as mentioned in the introduction, be effected at least by a first side including a first grooving share and a first press wheel arranged behind the first grooving share in relation to the direction of movement. Furthermore, the device may include at least one carrying unit for cover material, where the at least one carrying unit is arranged at the first and/or the second side of the apparatus and thus extends towards the area to be covered. It is thus an adjacent side of the cover material which is fixed along the direction of movement.

Such a fixing may occur in several ways. For example, a groove with a given depth can be formed in the cultivation medium by a narrow share, where the cover material is pressed down into this groove along an edge. The depressing may occur by a narrow wheel running immediately after the narrow share. The narrow wheel may be provided with a shoulder simultaneously pressing the cultivation medium together about the cultivation medium in the groove. Alternatively, a press roller can be arranged behind the narrow depressing wheel.

In another variant of a device according to the invention, an apparatus for fixing cover material may include a first grooving share with a leading edge and a trailing edge arranged at the first side of the apparatus, a first press wheel arranged behind the first grooving share in relation to the direction of movement, and a first cover share with a leading edge and a trailing edge arranged behind the first press wheel as seen in relation to the direction of movement. In that the trailing edge of the first grooving share is arranged closer to the second side of the apparatus than the leading edge of the first grooving share, and that the leading edge of the first cover share is closer to the second side of the apparatus than the trailing edge of the first cover share, there is achieved a moving of soil or growth medium such that the cover material can be provided in a groove and subsequently fixed when the cultivation medium is moved in over the edge with a cover share.

The object of the invention is further achieved by a method for laying cover material on a cultivated area of the type mentioned in the introduction, which is peculiar in that an edge of the cover material is forced down into the groove during movement of the apparatus such that the cover material lies over the cultivated area and extending away from the apparatus, and that the apparatus brings the removed soil entirely or partially back into the groove, preferably upon the edge, for fixing the cover material.

In that the trailing edge of the first grooving share of the apparatus is nearer to the second side than the leading edge, it is achieved that the soil moved by the share is moved towards the inner side of the apparatus. By leading and trailing edge is meant the front and rearmost part, respectively, of the share in contact with the soil during movement of the apparatus. The grooving share may e.g. be in the shape of a rotating share, or a stationary share such as a ploughshare.

A press wheel is disposed behind the grooving share. The press wheel can be a rubber wheel, a steel roller or similar, but in its simplest form be constituted by a press plate which in principle is dragged over the web. The press wheel is arranged such that it will move in the groove formed by the grooving share moving the soil during movement of the apparatus.

Behind the press wheel is a cover share. The cover share is substantially a reversed version of the grooving share such that the grooving share can move soil in a direction from the second side towards the first side. The cover share will typically be arranged such that soil removed by the grooving share is completely or partially moved back into the groove by the cover share, but now upon the laid out web or film. The cover share may also be designed as e.g. a rotating share or a fixed share such as a ploughshare, or it may be a press wheel that compacts and/or moves cultivation medium back into the groove.

In a simple embodiment, the apparatus is equipped with means for mounting on a vehicle, such as a narrow gauge tractor or a common tractor. Hereby is achieved that the apparatus is easily carried, moved and propelled forward. Moreover, the apparatus may include means for bringing the shares into driving position or mutual position for transport or adaptation to operation to varying conditions. These means may be lifting/lowering, rotating or displacing means where either shares or press wheels are displaced, possibly assisted by hydraulic, pneumatic or electric actuators but may also be means for engaging and coupling together with the tool-carrying implements typically found on agricultural vehicles.

By forming a groove by removing or moving soil in direction against the second side of the apparatus, it is achieved that an edge of the cover material easily can be moved down into the groove such that cover materials extend a certain distance away from the apparatus. This enables use of the apparatus for fixing edges on cover material of any size as the apparatus is only to be moved the whole way along the edges of the cover material. Moreover, no requirements are made to the shape of the cover material, and the method may therefore be used on cover materials that are individually adapted to the individual cultivation areas.

According to a further embodiment, the method for laying the cover material is peculiar in that the film is retained in the groove, preferably by a press wheel on the apparatus, immediately before the removed soil is moved completely or partially back into the groove for fixing the cover material.

Hereby is achieved that the cover material is temporarily retained by the press wheel before soil is applied. This ensures that the cover material is correctly moved down into the groove while at the same time the press wheel further assists in pulling the edge of the unfastened cover material down into the groove.

In a simple embodiment, the apparatus will be equipped with a seat such that a person manually can ensure that the edge of the web is moved under the press wheel during movement of the apparatus.

According to a further embodiment of the apparatus for fixing cover material, the apparatus is peculiar by including a second grooving share with a leading edge and a trailing edge arranged at the second side of the apparatus, a second press wheel arranged behind the second grooving share in relation to the direction of movement, a second cover share with a leading edge and a trailing edge arranged behind the second press wheel, as seen in relation to the direction of movement, where the trailing edge of the second grooving share is closer to the first side of the apparatus than the leading edge of the second grooving share, and that the leading edge of the second cover share is closer to the first side of the apparatus than the trailing edge of the second cover share.

Irrespective of using grooving shares, press wheels and cover shares as described above or using other means or method for fixing a cover material, advantages can be achieved by having shares at both sides of the apparatus since it is achieved that the apparatus may fasten cover materials at both sides, either simultaneously or individually. Respective shares and press wheels or other means may advantageously be with actuation means allowing operation of one, the other or both sides of the machine, providing an increased degree of freedom during use.

According to a further embodiment, the method for laying out cover material is peculiar in that the apparatus may be adapted with means for during the movement to form an additional groove near the second side of the apparatus, where an edge of a further cover material is forced down into the groove such that the cover material lies over the cultivated area extending away from the apparatus, and that the apparatus includes means that either brings the removed soil entirely or partially back into the groove for fixing the additional cover material, or fixes the cover material in the groove in other ways.

Hereby is achieved increased efficiency as two cover materials can be fastened at the same time.

According to a further embodiment of the apparatus for fixing cover material, the apparatus is peculiar by including means for changing the spacing between the first and second sides of the apparatus.

Hereby is achieved that webs/films with different widths or webs/films that are to be laid with varying spacing can be laid simultaneously as the shares at the first and the second side, respectively, are moved when changing the spacing. This is particularly advantageous when one web/film is unrolled and fixed at one side of the apparatus while at the same time an edge from an already unrolled web/film is fixed at the second side of the apparatus such that it may be ensured that the already unrolled web/film lies extended tight across the cultivated area.

The means for changing the spacing may be provided in connection with a frame structure on the apparatus, and will typically be in the form of hydraulic, electric or pneumatic displacing apparatuses, such as e.g. actuators.

The apparatus may further include similar means that may adjust the spacing between the shares or other means at first and second sides, respectively, in a direction in parallel with the direction of movement.

It will hereby be possible to achieve a very narrow working width of the apparatus, while at the same time the apparatus will still have room for seats for persons who therefore unhindered can assist in laying cover material during use of the apparatus.

According to a further embodiment of the apparatus for fixing cover material, the apparatus is peculiar by including one or more carrying units for cover material at the first and/or second side of the apparatus.

Cover material in the form of very large webs is typically folded and possibly rolled up on a roll or coil after being folded longitudinally. The carrying unit may e.g. consist of a container for folded material, or of a shaft on which a roller or coil may be mounted such that the roller or coil can rotate about the shaft, or a carrying unit may include at least to carrier rollers upon which a rolled up cover material can be placed, whereby the web is unrolled and laid out concurrently with the movement of the apparatus. In the following, the term shaft will be used generally to include a regular shaft but also carrier rollers and other possible means for holding a roll or coil with covering medium.

The carrying units may alternatively be mounted on the vehicle driving the apparatus. This may be advantageous if very large covering materials with great weight are applied. At the same time, it is possible to couple the carrying units to the vehicle or to another mechanism in order thereby to achieve a forced rotation of the shaft or shafts, whereby laying of heavy webs can be effected in a much easier way.

According to a further embodiment, the method for laying cover materials is peculiar in that the cover material is supplied from one or more carrying units.

Hereby is achieved that the cover material can be laid simultaneously with fixing it. As only one edge of the cover material per side can be fastened, it is not required that the cover material is rolled up nicely. The laying and fixing may take place as long as the edge is moved under the press wheel as described above. Hereby is achieved that folded cover material can be laid out and fixed simultaneously. Furthermore, this means that cover material may easily be reused as the method does not require a certain way of folding/rolling of the cover material.

By new rolls, irrespectively whether these are rolled up in a single layer or in multiple layers, the free edge side of the roll facing the apparatus may advantageously be fixed at first. After fastening the first edge side of the web, the web will thereby simultaneously be laid on the area away from the apparatus. By using coiled recycled rolls, the edge side of the web laid out at first will be loosened and separated from the other cover material before and concurrently with the press wheel engaging the edge.

Furthermore, it is achieved that by the method an edge of cover material which is already laid at one side of the apparatus can be fixed while at the same time some new cover material is unrolled and fixed at another side of the apparatus. This means that by the method already laid material can be fixed while simultaneously laying out new material for later fixing.

According to a further embodiment of the device for fixing cover material, the apparatus is peculiar by including a shaft arranged in a horizontal plane, preferably in parallel with the direction of movement, where the shaft has a free end part, and where the apparatus includes means for elevating, lowering and tilting the shaft in relation to the cultivated area.

The apparatus may hereby be used for collecting and unloading cover material which is coiled about a pipe or a pulley in that the free end part is inserted in the roll. The shaft may either be mounted directly on the apparatus, or may advantageously be mounted in front of the towing vehicle such as tractor. In that the shaft is mounted in front of a tractor, very large and heavy rolls may be collected. This is advantageous as very heavy rolls may cause the apparatus and/or the tractor to overturn if arranged at the side of the apparatus.

The shaft may further act as a carrying unit during laying of a web as the web can be moved from the shaft to the press wheel at the first or second side of the apparatus. The apparatus may further include a vertically arranged pin, contact roller, pulley or similar that may assist in guiding the edge of the web to the press wheel.

According to a further embodiment of the device for fixing cover material, the apparatus is peculiar by including means for pivoting the shaft in the horizontal plane, preferably between a direction which is substantially in parallel with the direction of movement and a direction which is substantially at right angles to the direction of movement.

The shaft may hereby be pivoted to one or the other side of the apparatus and the shaft may thereby be used as carrying unit. Since the shaft can be tilted, it is further achieved that the roll with cover material can be adjusted relative to the cultivated area; this may particularly be advantageous in hilly terrain where there may be a risk of the roll sliding off the shaft or overturning of the apparatus. This may then be counteracted by tilting the shaft such that the point of gravity of the roll is changed in relation to the apparatus.

According to a further embodiment of the device for fixing cover material, the apparatus is peculiar by including propulsion means.

By propulsion means is meant means for driving the apparatus, preferably driving a set of wheels, and means for steering the apparatus such that the apparatus is a self-propelled agricultural apparatus.

According to a further embodiment of the device for fixing cover material, the apparatus is peculiar by including at least one insertion means for inserting a cover material in front of a press wheel.

Hereby is achieved that the cover material is automatically inserted in front of a press wheel and thereby fixed. The insertion means may include radially co-driven wheel pairs or rollers, one or more arms gripping the edge of the material and inserting it in front of the press wheel. Alternatively, the means may include a suction mechanism that may suck on to the edge of the material such that it is retained in front of the press wheel. The means may also be passive elements with a groove or a slot in which the edge of the material may pass, where this groove or slot will guide the cover material down in front of the press wheel.

By using horizontally rotatable and speed regulated wheel pairs or rollers it will e.g. be possible to control the transverse movement of the edge relative to the direction of movement as well as the laying of the second edge side of the web may also be effected automatically e.g. under consideration of the tensile breaking strength of the web.

### Description of the Drawing

The invention is described in the following with reference to the drawing, wherein:
- Fig. 1: shows the device viewed from above;
- Fig. 2: shows the device with a carrying unit; and
- Fig. 3: shows the device during laying of cover material.

In the explanation of the Figures, identical or corresponding elements will be provided with the same designations in different Figures. Therefore, no explanation of all details will be given in connection with each single Figure/embodiment.

### List of reference numbers:

1. apparatus
2. first side
3. second side
4. vehicle
5. direction of driving
6. first grooving share
7. first press wheel
8. first cover share
9. trailing edge of first grooving share
10. leading edge of first grooving share
11. leading edge of first cover share
12. trailing edge of first cover share
13. second grooving share
14. second press wheel
15. second cover share
16. trailing edge of second grooving share
17. leading edge of second grooving share
18. leading edge of second cover share
19. trailing edge of second cover share
20. carrying unit
21. rolled up cover material

### Detailed Description of the Invention

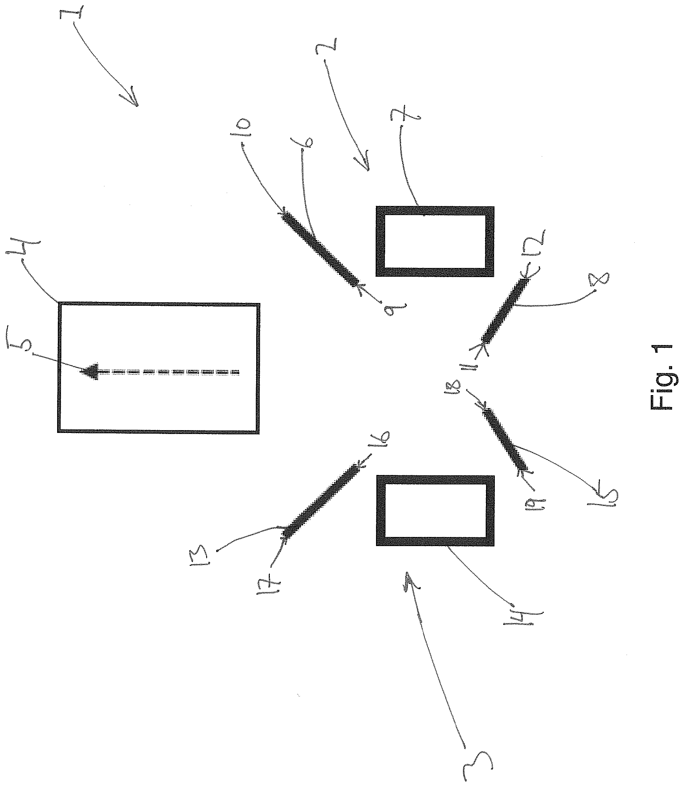

Fig. 1 shows a drawing of the apparatus comprising a vehicle 4 and the apparatus 1 as seen from above. The apparatus 1 has a first side 2 and a second side 3. In the shown embodiment, the apparatus 1 is towed by a vehicle 4, such as a tractor, having a driving direction 5. For the sake of clarity, coupling between apparatus 1 and vehicle 4 is not shown, and the frame structure constituting the load-supporting part of the apparatus and the fastenings to which the individual parts are fixed are not shown either as these parts are not essential for understanding the invention.

The apparatus 1 includes a first grooving share 6 arranged in front of the first press wheel 7 in relation to the direction of driving 5. A first cover share 8 is arranged behind the press wheel 7.

The first grooving share 6 has a trailing edge 9 which is nearer the second side 3 than the leading edge 10 of the first grooving share. The first cover share has a leading edge 11 which is closer to the second side 3 than the trailing edge 12 of the first cover share.

The apparatus 1 includes a second grooving share 13 arranged in front of a second press wheel 14 in relation to the direction of driving 5. A second cover share 15 is arranged behind the press wheel 14.

The second grooving share 13 has a trailing edge 16 which is closer to the first side 2 than the leading edge 17 of the second grooving share. The second cover share has a leading edge 18 which is closer to the first side than the trailing edge 19 of the second cover share.

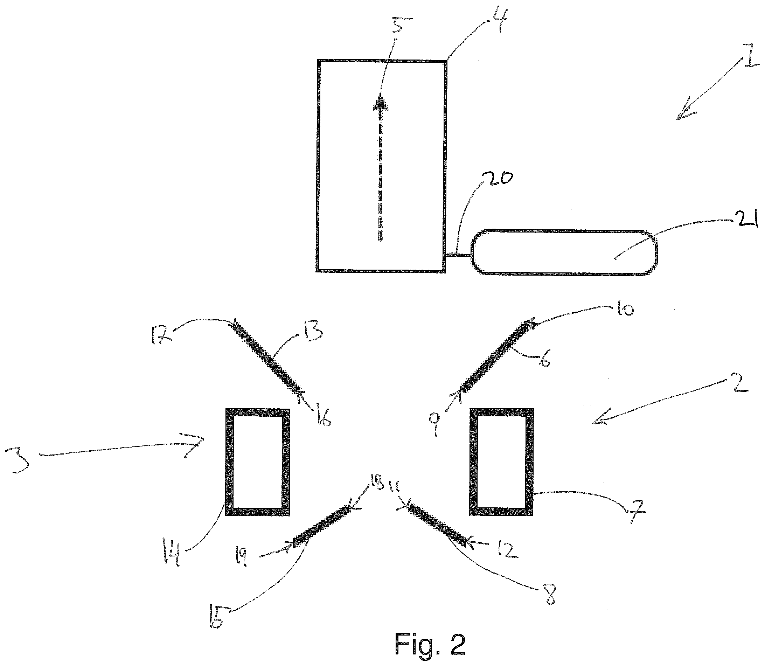

Fig. 2 shows an embodiment where a carrying unit 20 is mounted on the vehicle 4. On the carrying unit is placed rolled up cover material 21 intended for laying in a direction corresponding to the direction of driving 5 and in parallel with the vehicle 4.

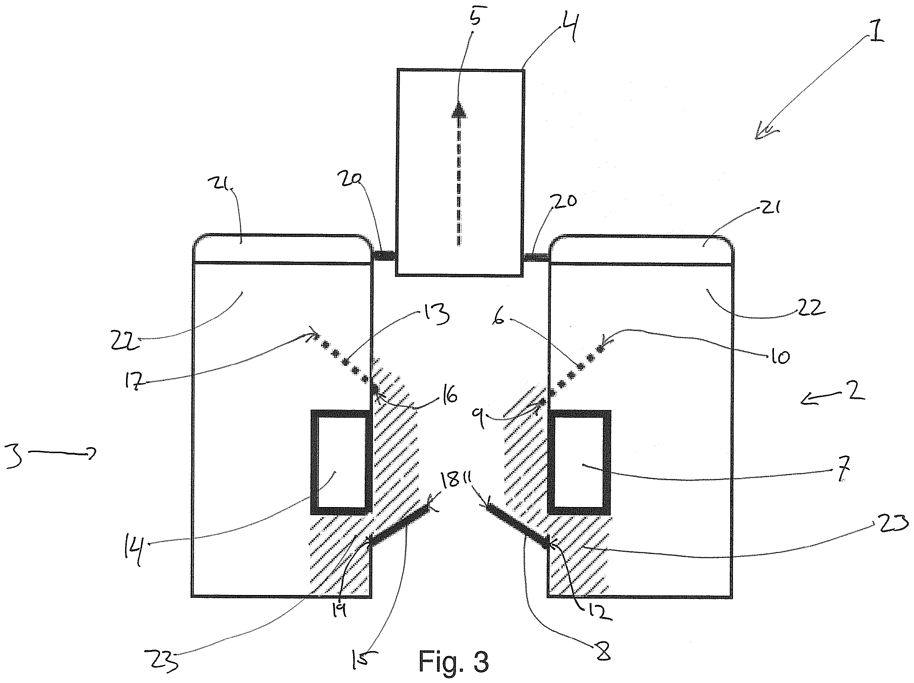

Fig. 3 shows the apparatus in use. In the shown embodiment, two carrying units 20 are mounted with each their roll of rolled up cover material 21. The cover material 22 is rolled out across the first and second grooving share 6, 13. The first and second grooving shares 6, 13 are arranged such that during movement in the direction of driving 5, a groove (not shown) is formed by removing soil 23 (shown as the hatched area) in which the first and second press wheel 7, 14 can retain the cover material 22. The first and second cover share 8, 15 are arranged such the removed soil 23 is moved back into the groove and upon the cover material 22 such that the latter is fixed. If the cover material 22 is folded, it may be unfolded subsequently in the usual way, possibly manually or by machine.

## Claims

1. A method for laying and/or fixing a covering material, such as a fibre web or plastic film, on a cultivated area and over a cultivation medium, where the cover material is laid by machine from a magazine and in a direction of movement by a a device adapted for the purpose, **characterised in that** the rolled- up covering material (21) is arranged on a at least one carrying unit (20), said at least on carrying unit (20) is arranged on the side of a vehicle (4) towing the apparatus (1) or where the at least one carrying unit (20) is arranged on the side of the apparatus (1), and wherein the film during laying extends partly in the direction of movement and partly in a direction which is substantially perpendicular to the direction of movement and towards the area to be covered away from the apparatus (1) and in a distance to the centre line of the apparatus (1) so as to align a first longitudinal edge of the cover material (22) relative to a first grooving share (6) and a first press wheel (7) of the apparatus (4) when seen in relation to the direction of movement, whereby the cover material during laying is fixed in cultivation medium along only the first longitudinal edge and followed by a subsequent fixation of the opposite longitudinal edge of the cover material.

2. Method according to claim 1, **characterised in that** a groove is formed in the cultivation medium in the direction of movement, that the cover material is arranged in this groove, and that the cover material is fixed in the groove, preferably with a press wheel (7) in the apparatus (1).

3. Method according to claim 1 and 2, **characterised in that** cover material is fixed at both sides of the apparatus (1), where the laid and fixed cover material thus extends away from both sides of the apparatus (1).

4. Device for performing a method according to claims 1 to 3 comprising a vehicle (4) and an apparatus (1), wherein a cover material, such as a fibre web or plastic film is laid and fixed for covering a cultivated area, where the apparatus (1) has a direction of movement, a first side (2) and a second side (3), where the apparatus (1) at least at a first side (2) includes a first grooving share (6) and first press wheel (7) arranged behind the first grooving share (6), as seen in relation to the direction of movement, **characterised in that** the device includes at least one carrying unit (20) for cover material, where said at least one carrying unit (20) is mounted on the side of a vehicle (4) towing the apparatus (1) or where the at least one carrying unit (20) is arranged on the side of the apparatus (1), and that said at least one carrying unit (20) is arranged so as to align a first longitudinal edge of the cover material (22) relative to the first grooving share (6) and the first press wheel (7) when seen in relation to the direction of movement, and that said at least one carrying unit (20) is arranged so as to extend from at least at the first side (2) of the apparatus (1) or the vehicle (4) and thus extends in a direction which is substantially perpendicular to the direction of movement of the apparatus (4) towards the area to be covered away from the apparatus (1).

5. Device for laying a cover material according to claim 4, **characterised in that** the apparatus (1) at the first side (2) as well as the second side (3) includes a grooving share (6, 13) and a press wheel (7, 14), where the press wheel (7, 14) is arranged behind the grooving share (6, 13) as seen in relation to the direction of movement.

6. Device for laying cover material according to any preceding claims, **characterised in that** the apparatus (1) includes at least one shaft arranged in a horizontal plane, preferably in parallel with the direction of movement, where the shaft has a free end part, and where the apparatus (1) includes means for elevating, lowering and tilting the shaft in relation to the cultivated area.

7. Device for laying a cover material according to claim 6, **characterised in that** the apparatus (1) includes means for pivoting the shaft in the horizontal plane, preferably between a direction which is substantially in parallel with the direction of movement and a direction which is substantially at right angles to the direction of movement.

8. Device for laying cover material according to any preceding claims, **characterised in that** the apparatus (1) includes propulsion means.

9. Device for laying cover material according to any preceding claims, **characterised in that** the apparatus (1) includes at least one insertion means for inserting a cover material in front of a press wheel (7).

10. Device for fastening cover material according to any preceding claims, **characterised in that** the apparatus (1) includes displacing means for changing the spacing between the first (2) and the second side (3) of the apparatus (1).

## Patentansprüche

1. Verfahren zum Auslegen und Befestigen eines Abdeckungsmaterials, wie etwa eines Faservlieses oder einer Kunststofffolie, auf einem kultivierten Bereich und über einem Kultivierungsmedium, wobei das Abdeckmaterial maschinell aus einem Magazin und durch eine Vorrichtung, die zu diesem Zweck angepasst ist, in einer Bewegungsrichtung ausgelegt wird, **dadurch gekennzeichnet, dass** das aufgerollte Abdeckungsmaterial (21) auf mindestens einer Trageinheit (20) angeordnet ist, wobei die mindestens eine Trageinheit (20) auf der Seite eines Fahrzeugs (4) angeordnet ist, welche die Einrichtung (1) zieht, oder wobei die mindestens eine Trageinheit (20) auf der Seite der Einrichtung (1) angeordnet ist, und wobei sich die Folie während des Auslegens teilweise in die Bewegungsrichtung und teilweise in eine Richtung, die im Wesentlichen rechtwinklig zur Bewegungsrichtung verläuft, und in Richtung des abzudeckenden Bereichs von der Einrichtung (1) weg und in einem Abstand von der Mittellinie der Einrichtung (1) erstreckt, um eine erste längsverlaufende Kante des Abdeckmaterials (22) in Bezug auf eine erste Rillpflugschar (6) und ein erstes Andrückrad (7) der Einrichtung (4) auszurichten, wenn man es in Bezug auf die Bewegungsrichtung betrachtet, wodurch das Abdeckmaterial während des Auslegens im Kultivierungsmedium nur entlang der längsverlaufenden Kante befestigt wird und eine nachfolgende Befestigung der gegenüberliegenden längsverlaufenden Kante des Abdeckmaterials folgt.

2. Verfahren nach Anspruch 1, **dadurch gekennzeichnet, dass** eine Rille im Kultivierungsmedium in Bewegungsrichtung gebildet wird, dass das Abdeckmaterial in dieser Rille angeordnet wird, und dass das Abdeckmaterial in der Rille befestigt wird, vorzugsweise mit einem Andrückrad (7) in der Einrichtung (1).

3. Verfahren nach Anspruch 1 und 2, **dadurch gekennzeichnet, dass** Abdeckmaterial auf beiden Seiten der Einrichtung (1) befestigt wird, wobei sich das ausgelegte und befestigte Abdeckmaterial somit von beiden Seiten der Einrichtung (1) weg erstreckt.

4. Vorrichtung zum Durchführen eines Verfahrens nach den Ansprüchen 1 bis 3, das ein Fahrzeug (4) und eine Einrichtung (1) umfasst, wobei ein Abdeckmaterial, wie etwa ein Faservlies oder eine Kunststofffolie, zum Abdecken eines kultivierten Bereichs ausgelegt und befestigt wird, wobei die Einrichtung (1) eine Bewegungsrichtung, eine erste Seite (2) und eine zweite Seite (3) aufweist, wobei die Einrichtung (1) mindestens an einer ersten Seite (2) eine erste Rillpflugschar (6) und ein erstes Andrückrad (7) beinhaltet, das hinter der Rillpflugschar (6) angeordnet ist, wenn man es in Bezug auf die Bewegungsrichtung betrachtet, **dadurch gekennzeichnet, dass** die Vorrichtung mindestens eine Trageinheit (20) für Abdeckmaterial beinhaltet, wobei die mindestens eine Trageinheit (20) an die Seite eines Fahrzeugs (4) montiert ist, das die Einrichtung (1) zieht, oder wobei die mindestens eine Trageinheit (20) an der Seite der Einrichtung (1) angeordnet ist, und dass die mindestens eine Trageinheit (20) angeordnet ist, um eine erste längsverlaufende Kante des Abdeckmaterials (22) in Bezug auf die erste Rillpflugschar (6) und das erste Andrückrad (7) auszurichten, wenn diese in Bezug auf die Bewegungsrichtung betrachtet werden, und dass die mindestens eine Trageinheit (20) angeordnet ist, um sich von der mindestens der ersten Seite (2) der Einrichtung (1) oder des Fahrzeugs (4) zu erstrecken und sich somit in eine Richtung erstreckt, die im Wesentlichen rechtwinklig zur Bewegungsrichtung der Einrichtung (4) in Richtung des abzudeckenden Bereichs weg von der Einrichtung (1) verläuft.

5. Vorrichtung zum Auslegen eines Abdeckmaterials nach Anspruch 4, **dadurch gekennzeichnet, dass** die Einrichtung (1) an der ersten Seite (2) sowie an der zweiten Seite (3) eine Rillpflugschar (6, 13) und ein Andrückrad (7, 14) beinhaltet, wobei das Andrückrad (7, 14) hinter der Rillpflugschar (6, 13) angeordnet ist, wenn man sie in Bezug auf die Bewegungsrichtung betrachtet.

6. Vorrichtung zum Auslegen eines Abdeckmaterials nach einem der vorhergehenden Ansprüche, **dadurch gekennzeichnet, dass** die Einrichtung (1) mindestens eine Welle beinhaltet, die in einer waagerechten Ebene angeordnet ist, vorzugsweise parallel zur Bewegungsrichtung, wobei die Welle einen freien Endabschnitt aufweist, und wobei die Einrichtung (1) Mittel zum Anheben, Absenken und Neigen der Welle in Bezug auf den kultivierten Bereich beinhaltet.

7. Vorrichtung zum Auslegen eines Abdeckmaterials nach Anspruch 6, **dadurch gekennzeichnet, dass** die Einrichtung (1) Mittel zum Drehen der Welle in der waagerechten Ebene beinhaltet, vorzugsweise zwischen einer Richtung, die im Wesentlichen parallel zur Bewegungsrichtung verläuft, und einer Richtung, die im Wesentlichen im rechten Winkel zur Bewegungsrichtung verläuft.

8. Vorrichtung zum Auslegen eines Abdeckmaterials nach einem der vorhergehenden Ansprüche, **dadurch gekennzeichnet, dass** die Einrichtung (1) Antriebsmittel beinhaltet.

9. Vorrichtung zum Auslegen eines Abdeckmaterials nach einem der vorhergehenden Ansprüche, **dadurch gekennzeichnet, dass** die Einrichtung (1) mindestens ein Einführmittel zum Einführen eines Abdeckmaterials vor einem Andrückrad (7) beinhaltet.

10. Vorrichtung zum Fixieren des Abdeckmaterials nach einem der vorhergehenden Ansprüche, **dadurch gekennzeichnet, dass** die Einrichtung (1) Verstellmittel zum Ändern des Zwischenraums zwischen der ersten (2) und der zweiten Seite (3) der Einrichtung (1) beinhaltet.

## Revendications

1. Procédé de pose et/ou de fixation d'un matériau de revêtement, tel qu'une bande de fibres ou un film plastique, sur une surface cultivée et par-dessus un milieu de culture, dans lequel le matériau de revêtement est posé par machine depuis un magasin et dans une direction de mouvement par un dispositif adapté à cet effet, **caractérisé en ce que** le matériau de revêtement enroulé (21) est disposé sur au moins une unité de transport (20), ladite au moins une unité de transport (20) est disposée sur le côté d'un véhicule (4) remorquant l'appareil (1) ou dans lequel l'au moins une unité de transport (20) est disposée sur le côté de l'appareil (1), et dans lequel le film pendant la pose s'étend en partie dans la direction de mouvement et en partie dans une direction qui est sensiblement perpendiculaire à la direction de mouvement et en direction de la surface à revêtir à l'écart de l'appareil (1) et à une distance de l'axe central de l'appareil (1) de manière à aligner un premier bord longitudinal du matériau de revêtement (22) par rapport à une première partie de rainurage (6) et à une première roue de presse (7) de l'appareil (4), par rapport à la direction de mouvement, moyennant quoi le matériau de revêtement pendant la pose est fixé dans le milieu de culture uniquement le long du premier bord longitudinal et suivi d'une fixation ultérieure du bord longitudinal opposé du matériau de revêtement.

2. Procédé selon la revendication 1, **caractérisé en ce qu'**une rainure est formée dans le milieu de culture dans la direction de mouvement, **en ce que** le matériau de revêtement est disposé dans cette rainure et **en ce que** le matériau de revêtement est fixé dans la rainure, de préférence avec une roue de presse (7) dans l'appareil (1).

3. Procédé selon la revendication 1 et 2, **caractérisé en ce que** le matériau de revêtement est fixé des deux côtés de l'appareil (1), dans lequel le matériau de revêtement posé et fixé s'étend depuis les deux côtés de l'appareil (1).

4. Dispositif pour la mise en oeuvre d'un procédé selon les revendications 1 à 3, comprenant un véhicule (4) et un appareil (1), dans lequel un matériau de revêtement, tel qu'une bande de fibres ou un film plastique, est posé et fixé pour revêtir une surface cultivée, dans lequel l'appareil (1) a une direction de mouvement, un premier côté (2) et un second côté (3), dans lequel l'appareil (1) au moins sur un premier côté (2) comprend une première partie de rainurage (6) et une première roue de presse (7) disposée derrière la première partie de rainurage (6), par rapport à la direction de mouvement, **caractérisé en ce que** le dispositif comprend au moins une unité de transport (20) pour un matériau de revêtement, dans lequel ladite au moins une unité de transport (20) est montée sur le côté d'un véhicule (4) remorquant l'appareil (1) ou dans lequel l'au moins une unité de transport (20) est disposée sur le côté de l'appareil (1), et **en ce que** ladite au moins une unité de transport (20) est disposée de manière à aligner un premier bord longitudinal du matériau de revêtement (22) par rapport à la première partie de rainurage (6) et à la première roue de presse (7), par rapport à la direction de mouvement, et **en ce que** ladite au moins une unité de transport (20) est disposée de manière à s'étendre depuis au moins le premier côté (2) de l'appareil (1) ou du véhicule (4) et s'étend ainsi dans une direction qui est sensiblement perpendiculaire à la direction de mouvement de l'appareil (4) vers la surface à revêtir à l'écart de l'appareil (1) .

5. Dispositif de pose d'un matériau de revêtement selon la revendication 4, **caractérisé en ce que** l'appareil (1) situé sur le premier côté (2) ainsi que sur le second côté (3) comprend une partie de rainurage (6, 13) et une roue de presse (7, 14), dans lequel la roue de presse (7, 14) est disposée derrière la partie de rainurage (6, 13), par rapport à la direction de mouvement.

6. Dispositif de pose de matériau de revêtement selon l'une quelconque des revendications précédentes, **caractérisé en ce que** l'appareil (1) comprend au moins un arbre disposé dans un plan horizontal, de préférence parallèle à la direction de mouvement, dans lequel l'arbre a une partie d'extrémité libre, et dans lequel l'appareil (1) comprend des moyens pour élever, abaisser et incliner l'arbre par rapport à la surface cultivée.

7. Dispositif de pose d'un matériau de revêtement selon la revendication 6, **caractérisé en ce que** l'appareil (1) comprend des moyens pour faire pivoter l'arbre dans le plan horizontal, de préférence entre une direction qui est sensiblement parallèle à la direction de mouvement et une direction qui est sensiblement perpendiculaire à la direction de mouvement.

8. Dispositif de pose de matériau de revêtement selon l'une quelconque des revendications précédentes, **caractérisé en ce que** l'appareil (1) comprend des moyens de propulsion.

9. Dispositif de pose de matériau de revêtement selon l'une quelconque des revendications précédentes, **caractérisé en ce que** l'appareil (1) comprend au moins un moyen d'insertion pour insérer un matériau de revêtement devant une roue de presse (7).

10. Dispositif de fixation de matériau de revêtement selon l'une quelconque des revendications précédentes, **caractérisé en ce que** l'appareil (1) comprend des moyens de déplacement pour modifier l'espacement entre le premier (2) et le second côté (3) de l'appareil (1).
